# EUROPEAN PATENT SPECIFICATION

(11) **EP 2 235 440 B1**
(45) Date of publication and mention of the grant of the patent: **08.11.2017**
(21) Application number: 08863429.0
(22) Date of filing: 19.12.2008
(51) Int. Cl.: F23C 9/00, F23L 7/00

(54) **METHOD OF CONTROLLING A PROCESS OF GENERATING POWER BY OXYFUEL COMBUSTION**
VERFAHREN ZUR STEUERUNG EINES PROZESSES ZUR ERZEUGUNG VON ENERGIE DURCH SAUERSTOFF-BRENNSTOFF-VERBRENNUNG
PROCÉDÉ DE CONTRÔLE D'UN PROCESSUS DE GÉNÉRATION DE COURANT PAR COMBUSTION D'OXYCARBURANT

(30) Priority: 20.12.2007 US 960958
(43) Date of publication of application: 06.10.2010
(73) Proprietor: Amec Foster Wheeler Power Equipment Company, Inc., Hampton, New Jersey 08827-9000 (US)
(72) Inventor: SELTZER, Andrew, Livingston, NJ 07039-2439 (US); FAN, Zhen, Parsippany, NJ 07054 (US); HACK, Horst, Hampton, NJ 08827 (US); ROBERTSON, Archibald, Whitehouse Station, NJ 08889-3901 (US)
(74) Representative: Genip Oy
(86) International application number: PCT/IB2008/055454
(87) International publication number: WO 2009/081364

(56) References cited:
- DE-A1- 19 503 348
- JP-A- 2007 147 162
- US-A- 4 355 601
- US-A1- 2002 185 043

## Description

### BACKGROUND OF THE INVENTION

### Field of the Invention

The present invention relates to a method of controlling a process of generating power by oxyfuel combustion. More particularly, the present invention relates to controlling oxyfuel combustion in different load conditions.

### Description of the Related Art

Oxyfuel combustion is one of the methods suggested for removing CO₂ from the exhaust gases of a power generating boiler, such as a pulverized coal (PC) boiler or a circulating fluidized bed (CFB) boiler. Oxyfuel combustion is based on combusting carbonaceous fuel with substantially pure oxygen, typically, of at least 95% purity, so as to have carbon dioxide and water as the main components of the exhaust gas discharged from the boiler. Thereby, the carbon dioxide can be captured relatively easily, without having to separate it from a gas stream having nitrogen as its main component, as when combusting the fuel with air.

The feeding rate of oxygen into a combustion system is regularly controlled together with the feeding rate of fuel, so that almost complete combustion of the fuel is obtained. In conventional air-firing at full load, typically, a relatively low level, say 3%, of excess oxygen in the flue gas is sufficient to keep the CO level of the flue gas sufficiently low, but at low loads, a higher level of excess air is needed to maximize steam superheating and to complete combustion. The increased excess air at low loads leads to reduced boiler efficiency due to increased thermal stack losses.

In conventional combustion with air, harmful effects caused by too high of combustion temperatures, such as increased NO_{X} emissions or corrosion, or material strength problems of the furnace walls, are often prevented by recirculating a portion of the flue gas back to the furnace. Thus, the oxygen content of the inlet gas is reduced from the about 21 % of air to a lower value, and the combustion temperature is thereby lowered. An example of a conventional combustion with air in which the flue gas recirculation rate is varied depending on the furnace load can be found in the U.S. Patent No. 4,355,601.

One of the advantages of oxyfuel combustion is the possibility to increase thermal efficiency of the process by using high combustion temperatures. However, combustion with nearly pure oxygen as the inlet gas would provide very high combustion temperatures. Therefore, in order to avoid harmful effects of too high of combustion temperatures, especially when repowering air-fired boilers to oxyfuel combustion, flue gas recirculation is advantageously used to lower the average oxygen content of the inlet gas.

U.S. Patent No. 6,935,251 discloses a method of combusting fuel with an oxidant stream comprising an oxygen-rich gas stream mixed with recirculated flue gas. According to this method, the rate of the flue gas recirculation is adjusted, so that the resulting mass flow rate of the flue gas is less than the corresponding mass flow rate of the flue gas generated by using air as the oxidant stream. By using such a reduced flue gas mass flow, the size of the flue gas channel and the pollution control equipment therein can be minimized. U.S. Patent No. 6,418,865 suggests repowering an air-combustion boiler to oxycombustion by adjusting the exhaust gas recirculation rate so as to maintain the heat transfer at the original specification.

One of the requirements of a power generation process is its applicability for use in different power demand conditions with high efficiency. According to conventional practice, reduced steam outputs are achieved by operating the boiler with reduced fuel and air feeding rates. Japanese patent publication No. 2007-147162 discloses a combustion control method of an oxygen burning boiler, wherein oxygen is supplied in an amount corresponding to the boiler load, and the exhaust gas recirculation rate is controlled so as to obtain the required absorption of heat for producing steam.

For oxyfuel combustion, especially when the flue gas mass flow is less than that in combustion with air, the operation at low loads may lead to a distorted flow pattern of the flue gas, increasing the risk of operational problems, for example, due to excessive fouling or dust accumulation in low-velocity regions of the exhaust gas channel. Thus, there is a need for an improved method of controlling oxyfuel combustion in different load conditions.

### SUMMARY OF THE INVENTION

An object of the present invention is to provide a method of controlling a process of generating power by oxyfuel combustion at different load conditions.

According to an aspect of the present invention, a method of controlling a process of generating power in a power plant with a boiler by combusting carbonaceous fuel with substantially pure oxygen is provided, the method comprising, at full load conditions, the steps of (a1) introducing a first carbonaceous fuel feed stream into a furnace, (b1) introducing a first substantially pure oxygen feed stream into the furnace for combusting the first carbonaceous fuel feed stream with the oxygen, (c1) discharging exhaust gas via an exhaust gas channel from the furnace, (d1) recovering heat from the exhaust gas by heat exchange surfaces arranged in the exhaust gas channel, and (e1) recirculating a portion of the exhaust gas via an exhaust gas recirculating channel at a first recirculation flow rate to the furnace, to form, together with the first substantially pure oxygen feed stream, a first inlet gas stream having a predetermined average oxygen content, thereby discharging exhaust gas from the furnace at a first discharge flow rate, and in second load conditions, corresponding to 90% or less of the full load, the steps of (a2) introducing a second carbonaceous fuel feed stream into the furnace, (b2) introducing a second substantially pure oxygen feed stream into the furnace for combusting the second carbonaceous fuel feed stream with the oxygen, (c2) discharging exhaust gas via the exhaust gas channel from the furnace, (d2) recovering heat from the exhaust gas by the heat exchange surfaces arranged in the exhaust gas channel, and (e2) recirculating a portion of the exhaust gas via the exhaust gas recirculating channel at a second recirculation flow rate to the furnace, to form together with the second substantially pure oxygen feed stream a second inlet gas stream, so as to discharge exhaust gas from the furnace at a second discharge flow rate, and controlling the second recirculation flow rate to be from the first recirculation flow rate to a value providing the second discharge flow rate to be substantially as high as the first discharge flow rate.

Any reference to a gas flow rate, throughout this description, can be considered to mean a volume flow rate, unless otherwise stated. By a "substantially pure oxygen feed stream" is meant an oxygen-rich stream, usually, having a purity of at least 95%, from an oxygen supply, such as a cryogenic air separator. The substantially pure oxygen feed stream is at all loads, as usual, such that substantially all of the fuel feed stream will be combusted with the oxygen, which means that the exhaust gas stream comprises a small amount, for example, 3%, of residual oxygen. The process also regularly comprises conventional measures for cleaning the exhaust gas from impurities, such as sulfur dioxide. The portion of the exhaust gas, which is not recirculated to the furnace, may be discharged from the system by condensing water and recovering carbon dioxide for sequestration or further use.

According to the present invention, the second fuel feeding rate corresponds to reduced load conditions, i.e., 90% or less of the full load. The second load conditions may preferably be 80 % or less of the full load, even more preferably, 70% or less of the full load. According to the present method, the exhaust gas recirculation rate is, at reduced load conditions, adjusted so that the flow rate of gas discharged from the furnace remains at a sufficiently high range. By having a high exhaust gas flow rate at all load conditions, the designed flow pattern of the exhaust gas, and the distribution of heat transfer in different heat transfer surfaces of the boiler, can be maintained. In practice, the exhaust gas flow rate may be fixed to a predetermined value or range, which depends on the conditions in question. The selected value or range is naturally such that it guarantees problem-free operation in all load conditions. Thus, the exhaust gas flow is sufficient to prevent, for example, unwanted excessive dust accumulation in low-velocity regions.

According to a conventional method, where the exhaust gas flow rate decreases at low load conditions, the distribution of heat absorbed in different heat transfer surfaces can be distorted, because of the varying relative amount of heat transferred with the exhaust gas. Thereby, for example, the amount of superheating of steam or the preheating of the feedwater in the exhaust gas channel may, at low load conditions, become too low. According to the present invention, the distribution of heat transfer in different heat transfer surfaces can be maintained even at low load conditions. Because the sufficient flow rate of gas discharged from the furnace is, according to the present invention, achieved by recirculating exhaust gas, not by discharging extra exhaust gas to the environment, the problem of reduced thermal efficiency due to thermal stack losses, is avoided.

According to the present invention, the flue gas recirculation is increased at low load conditions, so as to at least partially compensate for the decreased production of combustion gas. This method of controlling the flue gas recirculation clearly differs from the conventional method used in combustion with air, in which flue gas recirculation is used to avoid too high of temperatures in the furnace. At low load conditions, when the temperature in the furnace already decreases due to a reduced fuel feed rate, the need for conventional flue gas recirculation is minimized.

The prevention of harmful decreasing of the exhaust gas flow rate at low load conditions by increasing or at least maintaining the recirculating gas flow rate is especially beneficial in oxyfuel combustion, where the equipment for high exhaust gas recirculation is usually readily available, and the gas flow to be compensated for consists mainly of the decreased CO₂ production. This is in clear contrast with air-fired combustion, where exhaust gas recirculation is normally low or missing, and the change of the exhaust gas at low loads includes, in addition to a reduced flow of carbon dioxide, also, as a larger component, a decreased flow of nitrogen. Thus, the application of the present invention in air-fired combustion would bring about high costs, due to the arrangements needed for high additional exhaust gas recirculation at low loads.

When using the present invention, the recirculated gas flow rate may be increased at low loads by the same amount, in moles, as the substantially pure oxygen feed stream is decreased. Thereby, the volume flow rate of the exhaust gas remains constant. Alternatively, the recirculated gas flow rate may be increased at low loads by a smaller amount or, at least, the recirculated gas flow rate shall advantageously be maintained at a constant level. In all of these alternatives, the share of exhaust gas recirculated to the furnace is, at low loads, increased from that at full load. Thereby, the average oxygen content of the inlet gas is, at low loads, decreased.

When retrofitting an air-fired boiler for oxyfuel combustion, it is usually required to maintain, as much as possible, of the original combustion system, and, therefore, it is advantageous to at least partially keep the original furnace, flue gas channel and heat transfer surfaces. Thus, in order to obtain an average oxygen content of the inlet gas, which is close to that of air, the oxyfuel combustion process of a retrofitted boiler advantageously uses a high exhaust gas recirculation rate. Thereby, the fuel can be combusted by almost maintaining the original temperatures and gas flow rates. A similar construction is also advantageously used in dual-firing boilers, i.e., in boilers, which can be used both for combustion with air and for oxyfuel combustion. To obtain average oxygen contents of the inlet gas of 20% to 25%, typically, exhaust gas recirculation rates of about 81% to 75%, respectively, are required, the exact values depending on the level of impurities and residual oxygen in the flue gas.

For oxycombustion boilers in which the designed oxygen content of the inlet gas is relatively low, say 20% to 25%, it is especially advantageous to increase the recirculated gas flow rate at low loads, so that the flow rate of the exhaust gas remains substantially constant. The reason for this is that, for such a low oxygen boiler, even the maintaining of the exhaust gas flow rate increases the recirculated gas flow rate only by a relatively small amount. Alternatively, the exhaust gas flow rate can be allowed to slightly decrease, which means that the flow rate of the recirculated gas is increased even less.

For example, the maintaining of the exhaust gas flow rate, when changing the load from 100% to 70% in a boiler having, at full load, an inlet gas oxygen content of 25%, is obtained by increasing the flow rate of the recirculated exhaust gas by about 10%. Because the flow rate of the exhaust gas is constant, the share of exhaust gas recirculated back to the furnace changes as the flow rate of the recirculated gas, i.e., by about 10%, typically, from 75% to 82%. The oxygen content of the inlet gas is thereby decreased from 25% to about 18%, i.e., it is multiplied by 0.72. Correspondingly, for a boiler with a 20% full load inlet gas oxygen content, the exhaust gas flow rate can be maintained, when reducing the load to 70%, by increasing the recirculation gas flow rate by about 7%, whereby the oxygen content of the inlet gas decreases from 20% to about 15%, i.e., it is multiplied by 0.75.

According to a preferred embodiment of the present invention, the exhaust gas recirculation of an oxycombustion boiler having, at full load, an oxygen content of the inlet gas of 20% to 25%, is, at 70% load, increased, such that the average oxygen content of the inlet gas stream is reduced to a value, which is preferably 0.70 to 0.78 times, even more preferably, 0.72 to 0.75 times, the average oxygen content of the inlet gas stream at full load.

A new boiler, which is especially designed for oxyfuel combustion, is usually intended for combustion of fuel at a relatively high temperature with an inlet gas having an average oxygen content, which is clearly higher than that of air. The furnace and flue gas channel of such a boiler are advantageously clearly smaller in size than those of a corresponding air-fired combustion system. A new oxyfuel combustion boiler thus differs considerably from an oxyfuel combustion boiler, which is retrofitted from an air-fired boiler or from a combustion system intended for oxyfuel combustion and air-fired combustion, for example, in the arrangement of heat transfer surfaces. The present invention can, however, advantageously be used both in new and in retrofitted oxyfuel combustion boilers.

The average full load oxygen content of the inlet gas of a new oxyfuel combustion boiler may advantageously be, for example, about 40% to about 60%. These oxygen contents are typically obtained by recirculating about 58% to about 35%, respectively, of the exhaust gas back to the furnace. Then, for example, at 70% load, the flow rate of the exhaust gas can be maintained at its original value by increasing the exhaust gas recirculation to a value of about 71% to about 55%, respectively. These increased recirculation rates result in the average oxygen content of the inlet gas decreasing to a value of about 29% to about 43%, respectively, i.e., the oxygen contents are multiplied by about 0.72. A drawback of this controlling procedure is that the flow rate of the recirculated gas is thereby considerably increased at low loads. For example, the maintaining of the exhaust gas flow rate when changing the load from 100% to 70% in a boiler having, at full load, an inlet gas oxygen content of 60% would require an increase of about 55% of the recirculation gas flow rate at full load. Readiness for such a high increase would mean having a largely oversized recirculation channel and a correspondingly oversized fan for the operation at low loads. In order to minimize additional costs due to such devices, it is advantageous to use somewhat lowered gas recirculation, at low loads, in high oxygen boilers.

If, alternatively, for an oxycombustion boiler designed for 60% full load inlet gas oxygen content, the flow rate of the recirculation gas is maintained at 70% load at the same value as at full load, the flow rate of the exhaust gas is typically decreased by almost 20%. This is obtained by increasing the share of the exhaust gas recirculated back to the furnace from about 35% to about 44%, whereby the oxygen content of the inlet gas is reduced from 60% to about 52%, i.e., it is multiplied by 0.87. In this case, the recirculation devices designed on the basis of the gas streams at full load can be used, but the decreased flow rate of the exhaust gas may cause problems.

In cases when such a decreased exhaust gas flow rate already causes problems of dust accumulation or distorted heat transfer, the recirculated gas flow rate is advantageously, at low loads, controlled to be between the values of the examples described above. For example, if the recirculated gas flow rate of an oxycombustion boiler designed for 60 % full load inlet gas oxygen content is, at 70% load, increased by 20% of that at full load, whereby the inlet gas oxygen content is decreased to about 48%, i.e., it is multiplied by 0.80, the flow rate of the exhaust gas decreases only by about 12% of that obtained at full load.

According to a preferred embodiment of the present invention, the exhaust gas recirculation of an oxycombustion boiler having, at full load, an oxygen content of the inlet gas of 40% to 60%, is, at 70% load, increased, such that the average oxygen content of the inlet gas stream is reduced to a value, which is preferably 0.73 to 0.82 times, even more preferably, 0.77 to 0.81 times, the average oxygen content of the inlet gas stream at full load. It has been surprisingly found that these ranges provide cost efficient and problem-free operation of the boiler.

The exhaust gas discharge rate is, in practice, adjusted at full load so as to obtain a desired average oxygen of the inlet gas. The process of controlling the exhaust gas flow, at low loads, in accordance with the present invention, can be based on controlling the exhaust gas recirculation rate directly on the basis of the load, or on the basis of a measured fuel feeding rate. Alternatively, the controlling of the exhaust gas recirculation can be based on a measured flow rate of the exhaust gas discharged from the furnace. The exhaust gas recirculating rate can be controlled by adjusting the speed of a fan used for recirculating the exhaust gas, either directly to a set value, based on a desired recirculation rate, or by comparing a measured recirculated gas flow rate with the desired recirculation rate.

The present invention can, advantageously, be used in different types of power generating boilers, especially, in circulating fluidized bed (CFB) boilers and pulverized coal (PC) boilers. The fuel is advantageously solid fuel, especially, coal, biofuel or refuse-derived fuel. The substantially pure oxygen is typically obtained from an oxygen supply, such as a cryogenic or a membrane-based air separation unit.

The substantially pure oxygen and the recirculated exhaust gas may be fed to the furnace as separate streams, or they may be mixed to form an inlet stream to be fed to the furnace. The inlet gas may consist of a single gas flow, or it may consist of several flows, such as fluidization gas and secondary gas, in a CFB boiler, or primary, secondary and upper furnace inlet gas in a PC boiler. It is also possible that gas streams with different compositions are introduced into different portions of the furnace.

The brief description given above, as well as further objects, features, and advantages of the present invention, will be more fully appreciated by reference to the following detailed description of the currently preferred, but nonetheless illustrative, embodiments of the present invention, taken in conjunction with the accompanying drawing.

### BRIEF DESCRIPTION OF THE DRAWING

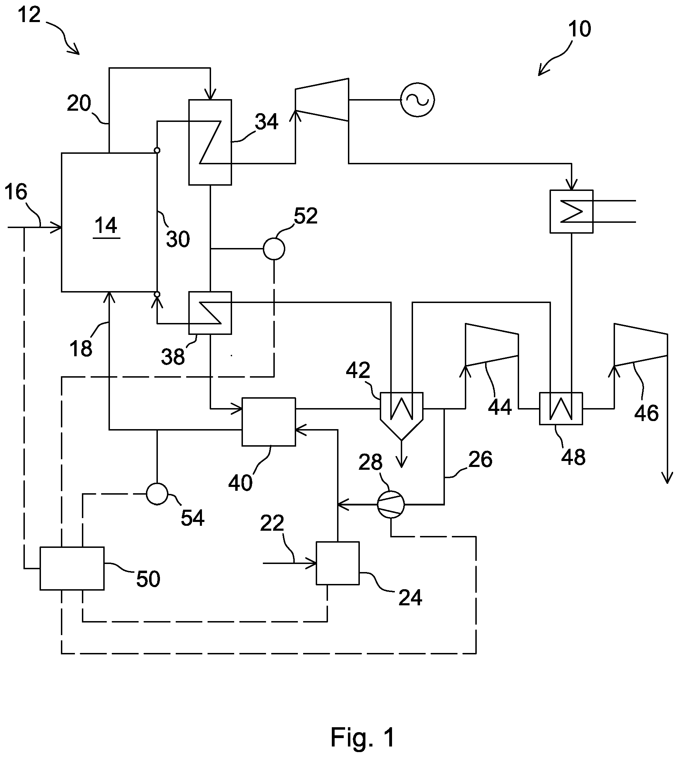

FIG. 1 is a schematic diagram of an oxyfuel-combusting power plant suitable for application of the present invention.

### DETAILED DESCRIPTION OF THE INVENTION

FIG. 1 shows a schematic diagram of a boiler plant 10 with a boiler 12, which may be, for example, a pulverized coal (PC) boiler or a circulating fluidized bed (CFB) boiler. The furnace 14 of the boiler comprises conventional fuel feeding means 16, means for introducing oxygen-containing inlet gas 18 into the furnace, and an exhaust gas channel 20 for discharging exhaust gas produced by combusting the fuel with the oxygen of the inlet gas. The details and type of some elements of the boiler 12, such as the fuel feeding means 16 and inlet gas feeding means 18, naturally depend on the type of the boiler. Details such as, for example, burners, coal mills, means for separately feeding primary and secondary inlet gas, are, however, not important for the purposes of the present invention, and they are thus not shown in FIG. 1.

The oxygen-containing inlet gas is preferably a mixture of substantially pure oxygen, produced from an air stream 22 in an air separation unit (ASU) 24, and a portion of the exhaust gas, which is recirculated via an exhaust gas recirculating channel 26. The exhaust gas recirculating channel 26 advantageously comprises means, such as a fan 28, for controlling the exhaust gas recirculating rate. The recirculating rate of the inlet gas is, in retrofitted boilers, advantageously adjusted such that the average O₂ content of the inlet gas is, at full load, close to that of air, preferably from 20% to 25%. A new oxyfuel boiler may advantageously be designed for a much higher oxygen content of the inlet gas, and the recirculating rate of the exhaust gas is, correspondingly, much lower. In some applications of the present invention, it is also possible to introduce the streams of recirculated exhaust gas and substantially pure oxygen separately into the furnace 14, for example, in different portions of the furnace.

The walls of the furnace 14 are preferably formed as a tube-wall construction, which forms evaporating heat transfer surfaces 30, for converting preheated feedwater to steam. An upstream portion of the exhaust gas channel 20 comprises a superheating heat transfer surface 34 for recovering heat from the exhaust gas to superheat the steam. For the sake of simplicity, FIG. 1 shows only one superheating surface, but, in practice, the upstream portion of the exhaust gas channel usually comprises multiple superheating and reheating surfaces.

The downstream portion of the flue gas channel 20 advantageously comprises one or more economizers 38, 42 for preheating feedwater to be fed to the evaporating heat transfer surfaces, and a gas-gas heater 40 for heating the inlet gas. The exhaust gas channel 20 also usually comprises different units for cleaning the exhaust gas from particles and gaseous pollutants, but they are not shown in FIG. 1.

Downstream of the branch point for the exhaust gas recirculating channel 26 is advantageously arranged means for producing liquid carbon dioxide, typically, at a pressure of about 110 bar, so that it can be transported for further use or to be stored to a suitable place. Therefore, FIG. 1 shows compressors 44, 46 for pressurizing the exhaust gas, and an economizer 48 arranged between the compressors for inter-stage cooling. The carbon dioxide liquefying system usually comprises, in practice, more than two compression stages, usually, at least four stages, in order to increase the efficiency of the system. In FIG. 1, the economizer 42 is shown as a condensing cooler, whereby water is removed from the exhaust gas. The carbon dioxide sequestration system also usually comprises means for completely drying all water from the exhaust gas, and means for separating oxygen, and possible other impurities, from the carbon dioxide, which are, however, not shown in FIG. 1.

When generating power by the boiler 10, the load level, i.e., the amount of fuel fed by the fuel feeding means 16 and the amount of oxygen provided by the air separation unit 24 are controlled by main control device 50, on the basis of the prevailing power demand. Then, according to the present invention, the exhaust gas recirculating rate is adjusted by the fan 28, so that the flow of the exhaust gas remains at a predetermined range. The speed of the fan 28 can be adjusted on the basis of, for example, the prevailing load, or a measured fuel feeding rate. The adjustment can, alternatively, be made on the basis of recirculated gas flow and/or the exhaust gas flow, as measured by suitable means 54, 52.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. A method of controlling a process of generating power in a power plant with a boiler by combusting carbonaceous fuel with substantially pure oxygen, the method comprising, at full load conditions, the steps of:
(a1) introducing a first carbonaceous fuel feed stream (16) into a furnace (14);
(b1) introducing a first substantially pure oxygen feed stream into the furnace for combusting the first carbonaceous fuel feed stream with the oxygen so as to produce exhaust gas;
(c1) discharging the exhaust gas via an exhaust gas channel (20) from the furnace;
(d1) recovering heat from the exhaust gas by a superheating heat exchange surface (34), arranged in an upstream portion of the exhaust gas channel; and
(e1) recirculating a portion of the exhaust gas via an exhaust gas recirculating channel (26), at a first recirculation flow rate to the furnace, to form, together with the first substantially pure oxygen feed stream, a first inlet gas stream (18) having a predetermined average oxygen content, whereby the exhaust gas is discharged from the furnace and flows through the superheating heat exchange surface (34) at a first discharge flow rate,
and, in second load conditions, corresponding to at most 90 % of the full load, the steps of:
(a2) introducing a second carbonaceous fuel feed stream (16) into the furnace (14);
(b2) introducing a second substantially pure oxygen feed stream into the furnace for combusting the second carbonaceous fuel feed stream with the oxygen so as to produce exhaust gas;
(c2) discharging the exhaust gas via the exhaust gas channel (20) from the furnace;
(d2) recovering heat from the exhaust gas by the superheating heat exchange surface (34) arranged in the exhaust gas channel; and
(e2) recirculating a portion of the exhaust gas via the exhaust gas recirculating channel (26) at a second recirculation flow rate to the furnace, to form, together with the second substantially pure oxygen feed stream, a second inlet gas stream (18), so that the exhaust gas is discharged from the furnace and flows through the superheating heat exchange surface (34) at a second discharge flow rate, and controlling the second recirculation flow rate to be from the first recirculation flow rate to a value providing the second discharge flow rate to be substantially as high as the first discharge flow rate.

2. The method according to claim 1, wherein the second load conditions corresponds to at most 80% of the full load.

3. The method according to claim 2, wherein the second load conditions correspond to at most 70% of the full load.

4. The method according to claim 3, wherein the average oxygen content of the first inlet gas stream is, by volume, from about 20% to about 25%, and the average oxygen content of the second inlet gas stream is 0.70 to 0.78 times the average oxygen content of the first inlet gas stream.

5. The method according to claim 3, wherein the average oxygen content of the first inlet gas stream is, by volume, from about 20% to about 25%, and the average oxygen content of the second inlet gas stream is 0.72 to 0.75 times the average oxygen content of the first inlet gas stream.

6. The method according to claim 3, wherein the average oxygen content of the first inlet gas stream is, by volume, from about 40% to about 60%, and the average oxygen content of the second inlet gas stream is 0.73 to 0.82 times the average oxygen content of the first inlet gas stream.

7. The method according to claim 3, wherein the average oxygen content of the first inlet gas stream is, by volume, from about 40% to about 60%, and the average oxygen content of the second inlet gas stream is 0.77 to 0.81 times the average oxygen content of the first inlet gas stream.

8. The method according to claim 1, further comprising a step of measuring the discharge flow rate.

9. The method according to claim 1, further comprising a step of measuring the recirculation flow rate.

10. The method according to claim 1, further comprising controlling the second recirculation flow rate by a fan.

## Patentansprüche

1. Verfahren zum Steuern eines Prozesses zum Erzeugen von Energie in einem Kraftwerk mit einem Kessel durch Verbrennen von kohlenstoffhaltigem Brennstoff mit im Wesentlichen reinen Sauerstoff, wobei das Verfahren unter Volllastbedingungen folgende Schritte umfasst:
(a1) Einleiten eines ersten kohlenstoffhaltigen Brennstoffzufuhrstroms (16) in einen Ofen (14);
(b1) Einleiten eines ersten, im Wesentlichen reinen Sauerstoffzufuhrstroms in den Ofen zum Verbrennen des ersten kohlenstoffhaltigen Brennstoffzufuhrstroms mit dem Sauerstoff zum Erzeugen von Abgas;
(c1) Ablassen des Abgases über einen Abgaskanal (20) aus dem Ofen;
(d1) Wiedergewinnen von Wärme aus dem Abgas über eine Überhitzungswärmetauscherfläche (34), die in einem vorgelagerten Abschnitt des Abgaskanals angeordnet ist; und
(e1) Zurückführen eines Anteils des Abgases über einen Abgasrückführkanal (26) auf einer ersten Rückführfließgeschwindigkeit zum Ofen zum Ausbilden, zusammen mit dem ersten, im Wesentlichen reinen Sauerstoffzufuhrstrom, eines ersten Einlassgasstroms (18) mit einem vorgegebenen mittleren Sauerstoffgehalt, wobei das Abgas aus dem Ofen abgelassen wird und durch die Überhitzungswärmetauscherfläche (34) auf einer ersten Ablassfließgeschwindigkeit strömt,
und unter zweiten Lastbedingungen, die höchstens 90% der Volllast entsprechen, folgende Schritte umfasst: (a2
) Einleiten eines zweiten kohlenstoffhaltigen Brennstoffzufuhrstroms (16) in den Ofen (14);
(b2) Einleiten eines zweiten, im Wesentlichen reinen Sauerstoffzufuhrstroms in den Ofen zum Verbrennen des zweiten kohlenstoffhaltigen Brennstoffzufuhrstroms mit dem Sauerstoff zum Erzeugen von Abgas;
(c2) Ablassen des Abgases über einen Abgaskanal (20) aus dem Ofen;
(d2) Wiedergewinnen von Wärme aus dem Abgas über die Überhitzungswärmetauscherfläche (34), die in einem vorgelagerten Abschnitt des Abgaskanals angeordnet ist; und
(e2) Zurückführen eines Anteils des Abgases über einen Abgasrückführkanal (26) auf einer zweiten Rückführfließgeschwindigkeit zum Ofen zum Ausbilden, zusammen mit dem zweiten, im Wesentlichen reinen Sauerstoffzufuhrstrom, eines zweiten Einlassgasstroms (18), sodass das Abgas aus dem Ofen abgelassen wird und durch die Überhitzungswärmetauscherfläche (34) auf einer zweiten Ablassfließgeschwindigkeit strömt, und Steuern der zweiten Rückführfließgeschwindigkeit bezüglich der ersten Rückführfließgeschwindigkeit auf einen Wert, der vorsieht, dass die zweite Rückführfließgeschwindigkeit im Wesentlichen so hoch wie die erste Rückführfließgeschwindigkeit ist.

2. Verfahren nach Anspruch 1, wobei die zweiten Lastbedingungen höchstens 80% der Volllast entsprechen.

3. Verfahren nach Anspruch 2, wobei die zweiten Lastbedingungen höchstens 70% der Volllast entsprechen.

4. Verfahren nach Anspruch 3, wobei der mittlere Sauerstoffgehalt des ersten Einlassgasstroms von ungefähr 20 Vol.-% bis ungefähr 25 Vol.-% beträgt und der mittlere Sauerstoffgehalt des zweiten Einlassgasstroms das 0,70- bis 0,78-Fache des mittleren Sauerstoffgehalts des ersten Einlassgasstroms beträgt.

5. Verfahren nach Anspruch 3, wobei der mittlere Sauerstoffgehalt des ersten Einlassgasstroms von ungefähr 20 Vol.-% bis ungefähr 25 Vol.-% beträgt und der mittlere Sauerstoffgehalt des zweiten Einlassgasstroms das 0,72- bis 0,75-Fache des mittleren Sauerstoffgehalts des ersten Einlassgasstroms beträgt.

6. Verfahren nach Anspruch 3, wobei der mittlere Sauerstoffgehalt des ersten Einlassgasstroms von ungefähr 40 Vol.-% bis ungefähr 60 Vol.-% beträgt und der mittlere Sauerstoffgehalt des zweiten Einlassgasstroms das 0,73- bis 0,82-Fache des mittleren Sauerstoffgehalts des ersten Einlassgasstroms beträgt.

7. Verfahren nach Anspruch 3, wobei der mittlere Sauerstoffgehalt des ersten Einlassgasstroms von ungefähr 40 Vol.-% bis ungefähr 60 Vol.-% beträgt und der mittlere Sauerstoffgehalt des zweiten Einlassgasstroms das 0,77- bis 0,81-Fache des mittleren Sauerstoffgehalts des ersten Einlassgasstroms beträgt.

8. Verfahren nach Anspruch 1, ferner umfassend einen Schritt des Messens der Ablassfließgeschwindigkeit.

9. Verfahren nach Anspruch 1, ferner umfassend einen Schritt des Messens der Rückführfließgeschwindigkeit.

10. Verfahren nach Anspruch 1, ferner umfassend das Steuern der zweiten Rückführfließgeschwindigkeit durch ein Gebläse.

## Revendications

1. Procédé de commande d'un processus de génération de courant dans une centrale électrique avec une chaudière par combustion d'un combustible carboné avec de l'oxygène substantiellement pur, le procédé comprenant, à pleine charge, les étapes suivantes :
(a1) introduction d'un premier flux d'alimentation de combustible carboné (16) dans un fourneau (14) ;
(b1) introduction d'un premier flux d'alimentation d'oxygène substantiellement pur dans le fourneau pour la combustion du premier flux d'alimentation de combustible carboné avec l'oxygène de manière à produire du gaz d'échappement ;
(c1) décharge du gaz d'échappement par le biais d'un canal de gaz d'échappement (20) à partir du fourneau ;
(d1) récupération de chaleur à partir du gaz d'échappement par une surface d'échange de chaleur en surchauffe (34) disposée dans une partie amont du canal de gaz d'échappement ; et
(e1) recyclage d'une partie du gaz d'échappement par le biais d'un canal de recyclage de gaz d'échappement (26), à un premier débit de recyclage vers le fourneau, pour former, ensemble avec le premier flux d'alimentation d'oxygène substantiellement pur, un premier flux de gaz d'entrée (18) présentant une teneur moyenne en oxygène prédéterminée, le gaz d'échappement étant déchargé à partir du fourneau et s'écoulant à travers la surface d'échange de chaleur en surchauffe (34) à un premier débit de décharge,
et, dans un deuxième état de charge, correspondant tout au plus à 90% de la pleine charge, les étapes suivantes :
(a2) introduction d'un deuxième flux d'alimentation de combustible carboné (16) dans le fourneau (14) ;
(b2) introduction d'un deuxième flux d'alimentation d'oxygène substantiellement pur dans le fourneau pour la combustion du deuxième flux d'alimentation de combustible carboné avec l'oxygène de manière à produire du gaz d'échappement ;
(c2) décharge du gaz d'échappement par le biais du canal de gaz d'échappement (20) à partir du fourneau ;
(d2) récupération de chaleur à partir du gaz d'échappement par la surface d'échange de chaleur en surchauffe (34) disposée dans le canal de gaz d'échappement ; et
(e2) recyclage d'une partie du gaz d'échappement par le biais du canal de recyclage de gaz d'échappement (26) à un deuxième débit de recyclage vers le fourneau, pour former, ensemble avec le deuxième flux d'alimentation d'oxygène substantiellement pur, un deuxième flux de gaz d'entrée (18), de telle façon que le gaz d'échappement est déchargé à partir du fourneau et s'écoule à travers la surface d'échange de chaleur en surchauffe (34) à un deuxième débit de décharge, et commande du deuxième débit de recyclage à partir du premier débit de recyclage à une valeur amenant le deuxième débit de décharge à être substantiellement aussi élevé que le premier débit de décharge.

2. Procédé selon la revendication 1, dans lequel le deuxième état de charge correspondant tout au plus à 80% de la pleine charge.

3. Procédé selon la revendication 2, dans lequel le deuxième état de charge correspond tout au plus à 70% de la pleine charge.

4. Procédé selon la revendication 3, dans lequel la teneur moyenne en oxygène du premier flux de gaz d'entrée est comprise, en volume, entre environ 20% et environ 25%, et la teneur moyenne en oxygène du deuxième flux de gaz d'entrée correspond de 0,70 à 0,78 fois à la teneur moyenne en oxygène du premier flux de gaz d'entrée.

5. Procédé selon la revendication 3, dans lequel la teneur moyenne en oxygène du premier flux de gaz d'entrée est comprise, en volume, entre environ 20% et environ 25%, et la teneur moyenne en oxygène du deuxième flux de gaz d'entrée correspond de 0,72 à 0,75 fois à la teneur moyenne en oxygène du premier flux de gaz d'entrée.

6. Procédé selon la revendication 3, dans lequel la teneur moyenne en oxygène du premier flux de gaz d'entrée est comprise, en volume, entre environ 40% et environ 60%, et la teneur moyenne en oxygène du deuxième flux de gaz d'entrée correspond de 0,73 à 0,82 fois à la teneur moyenne en oxygène du premier flux de gaz d'entrée.

7. Procédé selon la revendication 3, dans lequel la teneur moyenne en oxygène du premier flux de gaz d'entrée est comprise, en volume, entre environ 40% et environ 60%, et la teneur moyenne en oxygène du deuxième flux de gaz d'entrée correspond de 0,77 à 0,81 fois à la teneur moyenne en oxygène du premier flux de gaz d'entrée.

8. Procédé selon la revendication 1, comprenant en outre une étape de mesure du débit de décharge.

9. Procédé selon la revendication 1, comprenant en outre une étape de mesure du débit de recyclage.

10. Procédé selon la revendication 1, comprenant en outre la commande du deuxième débit de recyclage par un ventilateur.
